# EUROPEAN PATENT APPLICATION

(11) **EP 4 105 799 A1**
(43) Date of publication of application: **21.12.2022**
(21) Application number: 21753249.8
(22) Date of filing: 10.02.2021
(51) Int. Cl.: G06F 21/50, G06F 21/60

(54) **METHOD AND SYSTEM FOR PREVENTING MALICIOUS AUTOMATED ATTACKS**

(30) Priority: 12.02.2020 RU 2020106555
(71) Applicant: Limited Liability Company "Variti Plus", Moscow, 109004 (RU)
(72) Inventor: ZOLOTAREV, Vitalii Gennad'evich, Ermolino, 249028 (RU); BARABANOV, Anton Alekseevich, Moscow, 123182 (RU); LEKSUNIN, Oleg Aleksandrovich, Moscow, 141551 (RU)
(74) Representative: Osmans, Voldemars
(86) International application number: PCT/RU2021/050029
(87) International publication number: WO 2021/162589

(57) **Abstract**

The invention relates to the field of information security and can be used to filter requests to a computer system. The technical result is to ensure the safety of the protected resource from suspicious automated activity, malicious automated attacks; reducing the load on the computing power (processor) of both the user and the protected resource; reduced time to prevent malicious automated attacks. In the method for preventing malicious automated attacks, the user is evaluated based on the received request to the computer system about the session by means of technical analysis, during which the collection of request metrics is carried out, and the legitimacy of the request is evaluated by means of the prepared statistical model. In the method, an additional verification is carried out for a suspicious user to clarify his legitimacy using the JavaScript Challenge component; in the process of the verification, additional metrics of the suspicious user's browser are collected. If the user classified as suspicious, his access to the resource is blocked. The system comprises a server with a service/services for processing user requests, a module for assessing the legitimacy of the request from the user and an additional verification module.

## Description

The invention relates to the field of information security and can be used to filter requests to a computer system, in particular, to prevent malicious automated activity, DDoS attacks that overload the computer system and can be destructive to the computer system.

DoS attack is an attack on a computing system to bring it to a failure. Thus, DoS attack is carried out in order to create conditions under which legitimate (legal) users of the system cannot gain access to the resources (servers) provided by the system, or this access is significantly hampered. If an attack is carried out simultaneously from a large number of computers, it is called a DDoS attack (Distributed Denial of Service, distributed denial of service attack). There are two main types of DDoS attacks: bandwidth attacks and application attacks.

Bandwidth attacks are characterized by filling communication channels, allocated bandwidths and equipment with a large number of packets. Selected as a victim, routers, servers and firewalls, each of which has only limited processing resources, under the influence of an attack, may become unavailable to process correct transactions (data packets) or fail under heavy load. The most common form of bandwidth flood attack is packet flooding attack, in which a large number of seemingly good TCP protocol, User Datagram Protocol (UDP), or Internet Message Control Protocol (ICMP) packets are directed to a specific location.

Attacks on applications are characterized by the fact that the attacker, exploiting features of the behavior of the interaction protocols of computers (TCP, HTTP, etc.), as well as the behavior of services and applications, seizes the computing resources of the computer on which the object of attack operates, which does not allow the latter to process legitimate transactions and requests. Examples of attacks against applications are attacks with half-open HTTP connections and faulty HTTP connections.

Recently, computer systems have been increasingly subjected to so-called Slow-Rate, Low volume or "Low and Slow" attacks. These attacks take advantage of the flaws in the implementation of server-side applications (such as a web server) and can disable an important server-side service using only a small number of requests. The amount of traffic that is generated during such an attack can be very small, so detection methods for attacks on bandwidth are ineffective, and traditional methods of detecting attacks on applications often do not distinguish such malicious data packets from legitimate data packets, due to their similarity.

In the following discussion, we will focus on the protection of a resource (server). However, it should be noted that in addition to the resource itself in the traditional sense (in particular, the website that users visit using their browsers), the resource can include any web services built using the standards HTML, XML, WSDL, SOAP, etc. In addition, the server can provide interfaces for accessing other services, such as a DBMS. It should also be taken into account that the server may comprise not one physical computer (server), but a whole group (cluster or data center), which has its own load balancing mechanisms (not considered in this application).

A method is known, which implements the regulation of the flow of requests to the protected resource with the separation of legitimate requests made by a person, and not a robot, from malicious requests that are generated automatically by a computer. The method is based on the use of captcha (CAPTCHA). CAPTCHA is Completely Automated Public Turing test to tell Computers and Humans Apart, translated as "a computer test designed to determine who the user of the system is: a human or a robot (computer)." The main idea of the test is to offer the user such a task that can be easily solved by a human, but extremely difficult and time consuming for a robot. In the most common version of captcha, the user enters the characters shown in the figure, while the characters in the figure are depicted in such a way that it is very difficult for the machine to recognize them (often the characters are depicted with added noise or translucency).

However, this method has disadvantages. For example, due to advances in optical recognition technologies, the reliability of separating computer generated requests is not guaranteed. In addition, users need to identify and enter verification codes, which complicates the process of requesting and exchanging data between the protected system and the user.

One approach to regulating request flows and preventing, reducing the influence of suspicious activity, to completely or partially get rid of DoS attacks, is to configure the service in such a way that when sending a request to a resource, a suspicious user (potential bot, botnet) bears some computational costs on his side to gain access to the resource.

A solution is known [US2016344752 Brute force attack prevention system], in which the brute force attack prevention system includes input and output devices, processor.

In the method of preventing attacks realized by a system upon receiving a request from a client, the output device sends a login page to the client. Upon receiving a login, the client is sent a task token and a work factor based at least in part on the username. The system receives a response token, login and password on the input interface. The processor determines whether the response token meets conditions based at least in part on the work factor. The task token and work factor is a task that the client, on his side, must satisfactorily resolve so that the brute-force attack prevention system will consider it as a user attempt to log in. The processor additionally determines whether the username and password are valid for the case that the response token satisfies a condition based at least in part on the work factor. If the user does not solve the task, the response token does not satisfy the conditions, then the system does not consider this as an attempt to log in (ignores). In case the response token satisfies the conditions based on the work factor, and also the login and password are correct, the system logs the user in. If the login and password are not correct, the number of unsuccessful login attempts associated with the username increases. The work factor is based on the number of failed login attempts associated with the username.
a. In this case, the solution is aimed only at ensuring the security of the login to the system and does not solve problems associated with other suspicious activity and malicious automated attacks. For example, when trying to log into the system with multiple logon attempts and multiple logins, the number of logon attempts (and, accordingly, work factors) is small and does not require large computational costs.

Another analogue is known [US2014380418, System and method for verifying the legitimacy of requests sent from clients to server], in which a request to a protected resource is considered legitimate when the user spends some of his computing resources to access the server.

The procedure for qualifying request to the number of legitimate requests is carried out in the form of a challenge-response test (challenge-response). At the same time, the computer system limits the number of requests sent by the user for a certain period of time. To gain access to the resource, the user needs to spend on his part a certain amount of computing resources (his processor time) before he gets access on request. In particular, in order to gain access, the user needs to carry out lengthy computations (solve the task), which is ensured by the formulation of an NP class task, namely, the primary factorization of a large composite number consisting of two large prime factors (N, P). In the system, after a certain time, solutions to tasks are automatically deleted from the database, thus preventing their coincidence with the solution of the random NP task.

In addition, the following analogue is known [patent US 10291408 for the invention "Generation of Merkle trees as proof-of-work", published 14.05.2019]). It is based on an approach, the essence of which is that when receiving a request from a user for a resource, the system issues a computational task to the user, which task is the generation of a Merkle tree that he must correctly solve in order to gain access to the resource (proof of work).

In this case, it is necessary to spend more computing resources to solve the task than to check the solution. In some embodiments, the system issues the task in response to each user request (for example, during periods of abnormally high traffic or when the protected resource is subjected to a DoS attack). The task may include instructions for generating a Merkle tree of a certain depth, initial information that can be used to obtain the nodes of the Merkle tree, and a message. The task may also indicate that the message should be signed using a specific Merkle tree signing key. In some embodiments, the initial information may include a key identifier corresponding to the Merkle tree signing key. In some embodiments, the task includes a work factor. The work factor of the Merkle tree can refer to the number of hashing operations required to generate the complete Merkle tree.

These analogs solve the narrow problem of providing access to the resource. At the same time, the solutions used rare algorithms for generating the task that must be solved to gain access to the resource. There is no technical analysis on the basis of which it is possible to vary the complexity of the task issued, which must be solved to gain access to the resource, and thus reduce the load on computing power. It should also be noted that the system for preventing malicious automated attacks did not react to an increase in the time of access to the protected resource.

The present method and system for preventing malicious automated attacks on computer systems are aimed at solving the technical problem of providing a flexible, real-time (in situ) response to user requests, the ability to provide legitimate users without delay access to the protected resource, quickly responding to attacks, ensuring the security of the computing system from suspicious automated activity, malicious automated attacks, in particular, low-frequency DDoS attacks, due to the following technical result.

The technical result is:
- ensuring the security of the protected resource (computing system) from suspicious automated activity, malicious automated attacks, ddos attacks;
- reducing the load on the computing power (processor) of both the user and the protected system (resource);
- reducing the time to prevent malicious automated attacks.

The technical result is achieved in a method for preventing malicious automated attacks, in which:
a) the user is evaluated by means of technical analysis based on the received request to the computer system about the session, during which analysis the following is carried out:
   collecting numeric and statistical request metrics,
   calculation of metrics characterizing the user based on the statistics of his communication to the resource,
   determining metrics to show the deviation of a user's session from the median and average session based on general resource statistics;
   the obtained metrics are combined into a single vector of request factors and normalization is performed, evaluation of the legitimacy of the request is obtained by means of the prepared statistical model.
b) an additional verification is carried out for a suspicious user to clarify his legitimacy;
c) upon confirmation of the suspiciousness of the user, access to the resource is blocked.

The method collects numerical and statistical request metrics available at the network layer L3 and/or available at the transport layer L4 and/or available at the application layer, for example, HTTP/HTTPS protocol.

In the method, based on the available statistics of the communication of the user to the resource, the metrics characterizing the user are calculated, namely, median time between requests to the computer system, which is characteristic of the given user, is calculated.

In the method, when evaluating the user as legitimate, he is granted access to the resource, while providing a limited access token.

In the method, when carrying out additional verification of the user, additional metrics of the suspicious user's browser are obtained to detect bots,
generate a task based on the key,
the task and a request token are sent to the user computer system,
the task solution and a response token are received from the user computer system,
if incorrect solution is provided, the user's access to the resource is blocked.

In the method, when performing additional verification of the user, additional metrics of the suspicious user's browser are obtained, namely, the operability of various features of the Java Script language and/or CSS and/or HTML is validated and the version of the browser is specified, and also the window parameters, the presence of mouse movement, and others factors that ensure the clarification of the mode of operation of the browser are checked. In addition, a signature that is unique for a given browser installation is obtained, which at the same time does not provide a unique identification of the browser.

The technical result is achieved in a system for preventing malicious automated attacks, which system comprises:
the server comprising the service/services for processing user requests with a module for evaluating the legitimacy of the request from a user and with an additional verification module that performs additional verification of the user, while the module for evaluating the legitimacy of the request from the user consists of:
a module for collecting connection metrics at the network layer L3,
a module for collecting connection metrics at the transport layer L4,
a module for collecting basic metrics at the application level,
a module of statistical metrics of the user,
a module for comparing metrics for a session with the usual values for the given resource,
said modules are configured to transmit data to a module for computation of the vector of request factors, which is configured to transmit data to a module for sending factors to a statistical model and calculating the result,
wherein both of the last named modules are also made as part of the module for evaluating the legitimacy of the request from the user.

As part of the additional verification module, the following were included:
a JS stack checking module that checks the functionality of the JS language features,
a CSS stack checking module that checks the functionality of the CSS implementation features,
an HTML stack checking module that checks the functionality of the HTML implementation features,
a HeadLess detection module that checks the window parameters, the presence of mouse movement and factors that reveal the browser mode of operation,
a unique signature calculation module that calculates a signature that is unique to the given browser installation and prevents the browser from being uniquely identified,
a module for sending the collected data, whixh module is associated with the above-mentioned modules,
a cryptographic module generating and sending a task to the user, a. a starting unit associated with the above modules.

The essence of the invention is illustrated by the following figures.

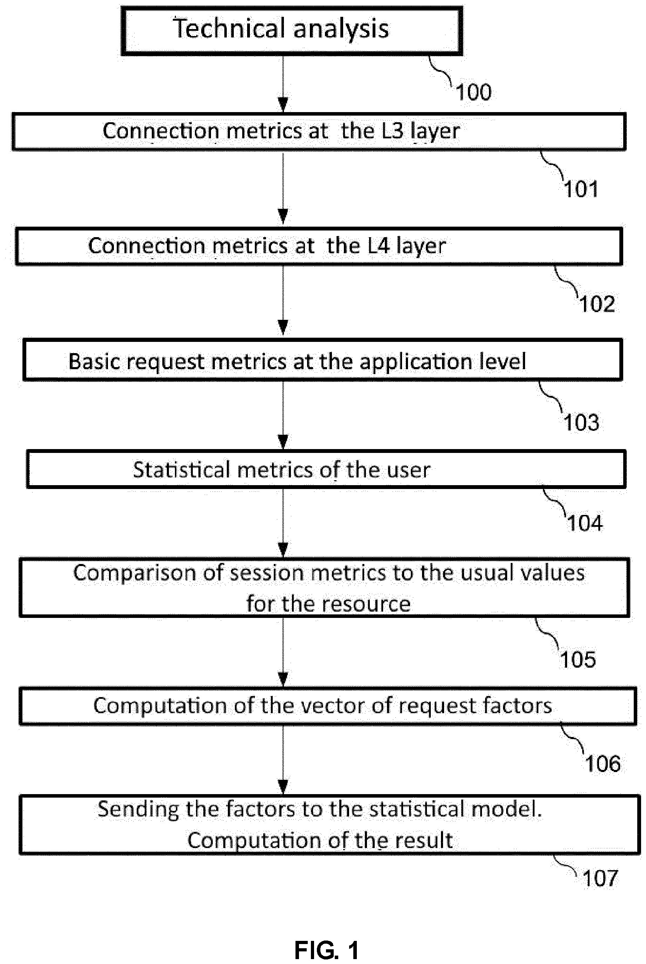

FIG. 1 shows block diagram of technical analysis (100) in the system for preliminary assessment of the legitimacy of a request, where:
101 is a module for collecting connection metrics at the network layer L3,
102 is a module for collecting connection metrics at the transport layer L4,
103 is a module for collecting basic metrics at the application level,
104 is a module of statistical metrics of the user,
105 is a module for comparing session metrics with the usual values for the given resource,
106 is a module for computation of the vector of request factors,
107 is a module for sending factors to a statistical model and calculating a result.

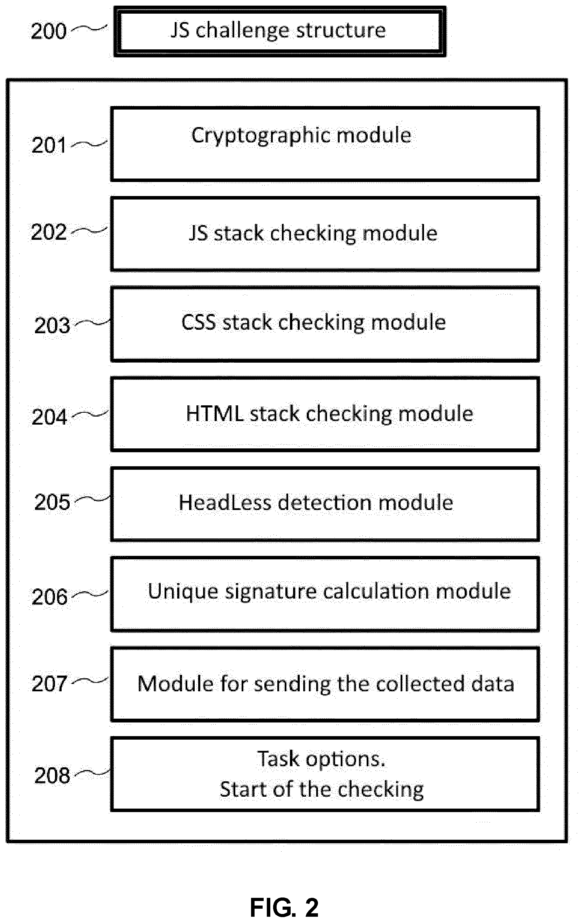

FIG. 2 shows block diagram of the Java Script (JS) challenge (200), where:
201 is a cryptographic module,
202 is a JavaScript stack checking module,
203 is a CSS stack checking module,
204 is an HTML stack validation module,
205 is a HeadLess detection module,
206 is a Unique signature calculation module,
207 is a module for sending collected data,
208 is a test trigger module.

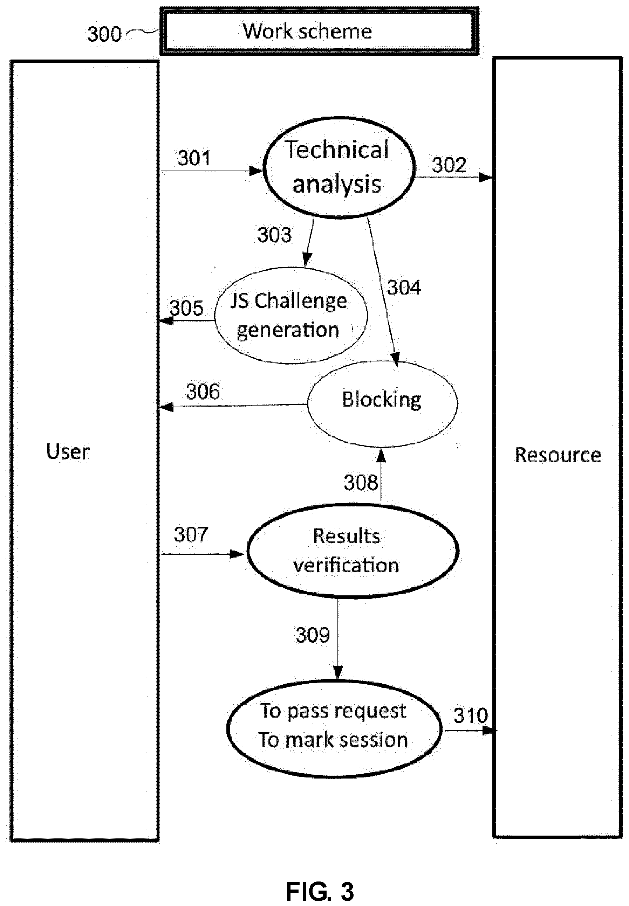

FIG. 3 shows general block diagram of the processing (300) by the system of a new session when a user requests a resource, where:
301 is receipt of a request from the user,
302 is providing access to the resource upon a legitimate request,
303 is generating a task (JS challenge) for a suspicious request,
304 is making a decision to block an illegitimate session,
305 is sending a response to the user in the form of the generated task,
306 is blocking user request,
307 is receiving from the user the solution of the generated task (JS challenge),
308 is blocking the user based on the result of solving the task,
309 is recognition of the session as legitimate based on the result of solving the task,
310 is admitting the session marked as legitimate to the server.

Used in the description of the technical solution, the terms "unit", "component", "element", "module" and the like are used to refer to computer entities that can be hardware/equipment (for example, device, tool, apparatus, equipment, an integral part of a device, for example, a processor, microprocessor, integrated circuit, printed circuit board, including an electronic printed circuit board, breadboard, motherboard, and so on, a microcomputer, etc.), software (for example, executable program code, compiled application, software module, piece of software or program code, etc.) and/or microprogram (in particular, firmware). Therefore, for example, a component can be a process running on a processor (processing unit), an object, executable code, program code, file, program/application, function, method, (software) library, subroutine, coroutine, and/or computing device (for example, microcomputer or computer) or a combination of software or hardware components. So, in a particular case, the application running on the server can be component/unit, and the server, in turn, can be component/unit. It is worth noting that at least one component/unit can be part of a process. The component/unit can reside on a single computing device (e.g. microcomputer, microprocessor, printed circuit board, etc.) and/or can be distributed/shared across multiple computing devices.

The proposed technical solution, like the above known analogs characterizing the prior art, is associated with the protection of a resource and the provision of access to the protected resource. However, the proposed solution is characterized by new essential features that make it possible to achieve the specified technical result and solve the technical problem.

The features are as follows.

At first, a technical analysis of the user is performed using a set of metrics (see FIG. 1), which provides the placement of the user into one of the categories: legitimate, suspicious and/or bot. Accordingly, in the first case, the user is provided with access to the resource, in the second case, an additional verification (JavaScript Challenge) is carried out, and in the third case, the blocking is performed. This approach allows not to load computing resources (CPU) if the request is knowingly made by a human (which is important for mobile devices and laptops due to their often low computing power). The legitimate user can immediately be granted access to the resource. If the request is knowingly made by a bot, it is blocked. The complex of metrics can contain such data as: type, browser version from the User-Agent header of the user, starting window size, options, flags and TTL.

Secondly, the behavior of the suspicious user is analyzed with respect to the frequency of requests and the structure of requests, and the current performance of the protected resource is estimated based on the analysis of the response time. By analyzing the behavior and assessing the current performance, the implementation of flexible loading (providing different levels of complexity) of a potential botnet is performed with a cryptographic task, on the solution of which the suspicious user must spend his computing resources. If there is no solution to the cryptographic task on the side of the potential botnet, which does not provide an opportunity to classify it as legitimate user, blocking is performed (FIGs. 2 and 3).

Third, cryptographic algorithms are used when setting the task for the potential bot. This approach guarantees easy implementation and reliability in attempts to select the result of the solution to gain access to the resource.

The use of asymmetric encryption allows, at a low cost for the system, to set tasks to the potential bot, on the solution of which it will spend much more of its computing resources.

Thus, due to these features, a decrease in the load on the computing power (processor) of both the user and the system is achieved. It also reduces the time it takes to prevent suspicious automated activity.

### Detailed description of the invention.

In the following detailed description of an implementation of the invention, numerous implementation details are set forth to provide thorough understanding of the present invention. However, it is obvious to those skilled in the art how the present invention can be used, both with and without these implementation details. In other instances, well-known techniques, procedures, and components have not been described in detail so as not to obscure the details of the present invention.

The block diagram in FIG. 1 describes the process of technical analysis (100) in the system for preliminary assessment of the legitimacy of the request from the user. The result of the technical analysis is the following options:
a legitimate request - client's request for a resource can be passed;
a suspicious request - the session should be subjected to additional verification (JS Challenge component);
an illegitimate request - the request must be blocked.

In the course of technical analysis in the system, modules (101) - (107) perform the following actions:
(101) - collect all kinds of numerical and statistical metrics available at the network layer L3 (IP layer of the TCP/IP model). For example, flags and TTL.
(102) - collect all kinds of numerical and statistical metrics available at the transport layer L4 (TCP layer of the TCP/IP model). For example, flags, options and starting window size.
(103) - collect all kinds of numerical and statistical metrics at the application level, HTTP/HTTPS protocol. For example, browser type, version from the User-Agent header.
(104) - based on the available statistics of the user's communication to the resource, the metrics characterizing the given client are calculated. For example, the median time between requests to the resource.
(105) - having general statistics on the resource, metrics are calculated that show the deviation of the client's session from the median and average session on the given resource.
(106) - combine the calculated metrics into the single vector of request factors and perform metrics normalization.
(107) - using a previously prepared statistical model, the result is calculated and evaluation of the legitimacy of the request is obtained.

To prepare and train the model, different machine learning techniques can be used, or the model can be written manually. To prepare and train the model, a control group of users is allocated for each possible group/subgroup of factors and is marked manually as a bot/human. The data obtained is used to calculate the level of suspicion for the given group/subgroup.

All modules are software components, part of a software package that the processor executes.

The network layer of the model is designed to define the data transmission path. It is responsible for translating logical addresses and names into physical ones, determining the shortest routes, switching and routing, tracking problems and "congestion" in the network.

Network layer protocols route data from source to destination. Devices (routers) operating at this level are conventionally called third-level devices (by the level number in the OSI model).

Network layer protocols: IP/IPv4/IPv6 (Internet Protocol), IPX (Internetwork Packet Exchange, Internet exchange protocol), X.25 (partially implemented at layer 2), CLNP (connectionless network protocol), IPsec (Internet Protocol Security). Routing protocols, RIP (Routing Information Protocol), OSPF (Open Shortest Path First).

Internet Protocol (IP, literally "inter-net protocol") is a routed network layer protocol of the TCP/IP stack. It was IP that became the protocol that united individual computer networks into the worldwide net named Internet. An integral part of the protocol is network addressing

The transport layer of the model is designed to provide reliable data transmission from the sender to the receiver. In this case, the level of reliability can vary widely. There are many classes of transport layer protocols, ranging from protocols that provide only basic transport functions (for example, functions for transmitting data without acknowledgment of receipt), and ending with protocols that guarantee the delivery of multiple data packets in the correct sequence to the destination, multiplex multiple data streams, provide a data flow control mechanism and guarantee the validity of the received data. The TCP protocol provides reliable continuous data transfer, excluding data loss or out of order of their arrival or duplication, can redistribute data, breaking large chunks of data into fragments and vice versa, gluing the fragments into one packet.

Transport layer protocols: ATP (AppleTalk Transaction Protocol), CUDP (Cyclic UDP), DCCP (Datagram Congestion Control Protocol), FCP (Fiber Channel Protocol), IL (IL Protocol), NBF (NetBIOS Frames protocol), NCP (NetWare Core Protocol), SCTP (Stream Control Transmission Protocol), SPX (Sequenced Packet Exchange), SST (Structured Stream Transport), TCP (Transmission Control Protocol), UDP (User Datagram Protocol).

Transmission Control Protocol, TCP, is one of the main data transmission protocols of the Internet, designed to control data transmission.

In the protocol stack, TCP/IP functions as the transport layer of the OSI model.

TCP mechanism provides a preconnected data stream with the previous connection, re-requests data in the event of data loss, and de-duplicates when two copies of the same packet are received, thereby ensuring the integrity of the transmitted data and notifying the sender of the results of the transmission.

When there is a computer-to-computer transmission over the Internet, TCP operates at the top level between two end systems, such as a browser and a web server. TCP reliably transfers a stream of bytes from one process to another. TCP implements flow control, congestion control, handshake, reliable transmission.

The system allows to create additional verifications of varying complexity to clarify the legitimacy of the request as described below. At the same time, additional browser metrics can be calculated to identify bots and botnets. All validation is consolidated into Java Script (JS) component and is performed directly by the browser.

FIG. 2 shows block diagram of the Java Script Challenge (JS Challenge) component comprising modules (201) - (208).

The cryptographic module (201) implements the asymmetric encryption algorithm, and is responsible for solving a mathematical task, the initial parameters of which are encoded in the starting unit (208). The task to be solved can have different complexity depending on the key size. You can generate several keys of different complexity in advance and, depending on the level of suspiciousness of the request, resource load or other factors, for example, the number of successful passes by suspicious users of additional verification, select one or another key.

JS stack validation module (202) checks the functionality of various features of the JS language, which allows to specify the browser version.

The CSS stack checking module (203) checks the functionality of various CSS implementation features, which allows the browser version to be specified.

The HTML Stack Validation module (204) checks the functionality of various HTML implementation features, which allows the browser version to be specified.

The HeadLess detection unit (205) checks the parameters of the window, the presence of mouse movement and other factors that allow to find out the browser operation mode.

The unique signature calculator (206) allows the computation of a signature that is unique for the given browser installation, which at the same time doesn't allow the browser to be uniquely identified. Such information can be used to detect multiple connections from one browser through different proxy servers, and therefore, such activity can be considered suspicious or illegitimate.

Based on the peculiarities of the JS/CSS/HTML implementation (during the operation of modules 202-204), it is possible to identify the exact version and type of the browser and compare with the information obtained during the technical analysis (100) during the operation of module (103), namely, browser type and version from the User-Agent header. If the information does not match, such a user can be classified as illegitimate.

The module for sending the collected data (207) assembles the result of the verification and the solution of the task into a single structure and sends it to the system on the server.

Starting unit (208) starts the checking with the modules (202) - (206) after loading the JS challenge module and invokes the cryptographic module (201) with the task start condition encoded in it.

The system operates as follows.

The system receives a request for a new session from the user. The general scheme (300) of processing the new session from the user to a protected resource includes the following.

When the request from the user arrives, it is sent (301) for technical analysis (100). When performing technical analysis, metrics are collected (which are necessary for technical analysis, FIG. 1), which are combined into the vector of request factors. Further, the prepared statistical model, based on the vector of the request factors, generates the result (evaluation) of the legitimacy of the request.

In case the session was recognized as legitimate (302), and, thus, the user is identified as a human (and not a bot), the session is sent to the protected resource.

If the session was recognized as illegitimate (304), it is subject to blocking. Blocking (306) is carried out either through 403 code (HTTP), or through other mechanisms that allow efficient utilization of the source resources.

If the session was recognized as suspicious (303), the system performs an additional verification, namely, generates Java Script Challenge (200). The complexity of the check (key size) varies depending on the level of suspiciousness of the request, the performance of the protected resource, and a metric showing the number of successful checks by suspicious users.

The generated JS Challenge is sent as a response (a task is sent) to the first session request (305), namely, the system sends the user an access token encrypted with an asymmetric encryption algorithm, for example, RSA. Other options for implementing the mark are also possible. For example, the system can send an encrypted message and an access token (as indicated in the analogue US 10291408). Then the system goes into the waiting mode for an answer.

Block (207) JS Challenge receives from the user a solution to the generated task and sends the results of the work to the server.

If the session is held invalid by the JS Challenge, it should be blocked.

If the session is recognized as legitimate, it must be marked (309) "legitimate" using the HTTP Cookie mechanism, request/response token or other mechanisms, for example, the mark is already embedded in the response of the protected system.

The marked legitimate session is sent to the server (310).

Legitimate sessions can be marked with a limited access token. Thus, the system prevents "manual" access and further use by the bot.

The system can be configured to force additional verification of all requests, then all requests after passing the technical analysis will be sent for additional verification with the JS Challenge.

### Example 1 - Legitimate User.

The user makes a request for the resource (301), the system performs technical analysis (100). There is a collection and calculation of numerical and statistical metrics, their combining into the vector of request factors (operation of modules 101-106) and the calculation (evaluation) of the legitimacy of the request using the prepared statistical model (107).

Based on the results of technical analysis (100), it is concluded that the request appears to be legitimate. If the mode of forced verification of all requests is not set, then the user gets access to the resource (302) and a limited access token in order not to perform technical analysis (100) again for each request. The token is limited both in time and in the number of requests.

If forced additional verification mode is set, simplified JS Challenge (303) is generated and sent to the user. After receiving the results (307), the request is passed to the resource (309, 310), and the user is given a limited access token.

### Example 2 - Suspicious User.

The suspect (potential bot) receives a task on which he (it) spends his (its) computing resources in order to gain access to the service.

The user makes a request for the resource (301), the system performs technical analysis (100). For example, the collection of numerical and statistical metrics at the application level, the HTTP / HTTPS protocol, showed that the browser type matches the type in the request to the system, but the version does not match. Or, for example, the calculation of metrics characterizing a given user (104) showed a significant deviation in the number of requests per unit of time in comparison with the average user (for example, the resource is a site with product offers, a significant excess of the number of requests per unit of time - the site is being parsed).
a. Based on the results of the technical analysis (100), the user is qualified as suspicious and additional verification is carried out. The complexity of the check is set by a pre-generated key. Key length is, for example, 512 bits. An access token and a public key are sent to the user. The browser encrypts the access token based on the public key. The solution of the task (encrypted access token), together with additional data collected in the browser during the operation of modules (202-206), is sent to the system on the server.

The system qualifies the suspect as a legitimate user and grants access to the resource.

### Example 3 An illegal user.

The user makes a request for the resource (301), the system performs technical analysis (100). Based on the results of technical analysis (100), the user is qualified as illegitimate and blocked.

For example, the collection of numerical and statistical metrics at the application level, HTTP/HTTPS protocol, showed that the version and type of the browser does not match the version in the request to the system. Also, the collection of numerical and statistical metrics available at the network layer L3 and transport layer L4 showed that the type of user's operating system does not match the type of the operating system in the request. The collected metrics were combined into the vector of request factors and sent to a statistical model. The result of user evaluation was his qualification as a bot and blocking.

In the present invention, modules (101-107, 201-208) mean components, a group of components implemented using hardware, such as integrated circuits, or, for example, as a combination of software and hardware, such as a microprocessor system and a set of programming instructions. The functionality of the modules (101-107, 201-208) can be implemented exclusively by hardware, as well as in the form of a combination, where part of the functionality is implemented by software, and some by hardware (software and hardware complex). In some embodiments, some of the modules (101-107, 201-208) may be executed on a processor of a general-purpose computer system.

An example of general-purpose computer system (server where the system is located) is described below.

A general-purpose computer system includes a personal computer or server comprising a central processing unit, system memory, and a system bus that comprises various system components, including memory associated with the central processing unit. The system bus is implemented as any bus structure known from the prior art, which in turn contains a bus memory or bus memory controller, a peripheral bus and a local bus that is capable of interfacing with any other bus architecture. System memory comprises read-only memory (ROM), random access memory (RAM).

The personal computer in turn contains a hard disk for reading and writing data, and may also include a magnetic disk drive for reading and writing to removable magnetic disks and an optical drive for reading and writing to removable optical disks such as CD-ROM, DVD-ROM and other optical media. The hard disk, magnetic disk drive, and optical drive are connected to the system bus through a hard disk interface, a magnetic disk interface or an optical drive interface, respectively. Drives and corresponding computer storage media are non-volatile storage media for computer instructions, data structures, program modules, and other data on the personal computer.

The present description discloses an implementation of a system that uses a hard disk, removable magnetic disk and removable optical disk, but it should be understood that other types of computer storage media can be used that are capable of storing data in a computer readable form (solid state drives, flash memory cards, digital disks, random access memory (RAM), etc.) that are connected to the system bus through the controller.

The computer has a file system that stores the recorded operating system, and also additional software applications, other program modules, and program data.

A personal computer is capable of operating in a networked environment using a network connection to other or more remote computers. The remote computer (or computers) are the same personal computers or servers that have most or all of the elements mentioned earlier in the description of the general-purpose computer system. Other devices may also be present in the computer network, for example, routers, network stations, peer-to-peer devices or other network nodes.

The network connections can form a local area network (LAN) or a wide area network (WAN). Such networks are used in corporate computer networks, internal networks of companies and, as a rule, have access to the Internet. In LAN or WAN networks, a personal computer is connected to the local network via the network adapter or network interface. When using networks, the personal computer may use a modem or other means of providing communication to a wide area network, such as Internet. A modem, which is an internal or external device, is connected to the system bus via a serial port. It should be clarified that the network connections are only indicative and are not required to reflect the exact configuration of the network, i.e. in fact, there are other ways of establishing a connection by technical means of communication of one computer with another.

In the present application materials, the preferred disclosure of the implementation of the claimed technical solution is presented, which should not be used as limiting other, particular embodiments of the invention, which do not go beyond the claimed scope of legal protection and are obvious to skilled in the relevant field of art.

## Claims

1. A method for preventing suspicious automated activity, in which:
a) a user is evaluated based on the received request to a computer system about the session by means of technical analysis, during which they carry out:
collection of numerical and statistical request metrics,
calculation of metrics characterizing the user based on the statistics of his communication to the resource,
determination of metrics based on general statistics on the resource, showing the deviation of user's session from the median and average session;
the obtained metrics are combined into the single vector of request factors and normalized, and the legitimacy of the request is evaluated by means of the prepared statistical model.
b) an additional verification is carried out in relation to a suspicious user to clarify his legitimacy;
c) upon confirmation of the user suspiciousness, access to the resource is blocked.

2. The method according to claim 1, wherein numeric and statistical request metrics available at the network layer and/or available at the transport layer and/or available at the application level are collected.

3. The method according to claim 2, wherein numerical and statistical metrics available at the application level, namely, the HTTP/HTTPS protocol are collected.

4. The method according to claim 1, wherein the metrics characterizing the user are calculated based on the available statistics of user's communication to the resource, namely, the median time between requests to the computer system is calculated, which is characteristic of the given user.

5. The method according to claim 1, wherein when evaluating the user as legitimate, he is provided with access to the resource, namely, a limited access token is provided.

6. The method according to claim 1, wherein in the process of additional verification of the user, additional metrics of the suspicious user's browser are obtained to identify bots
a task is formed based on the key,
the task and a request token are sent to the user's computer system,
a solution to the task and a response token are received from the user's computer system,
if an incorrect solution is provided, the user's access to the resource is blocked.

7. The method according to claim 6, wherein additional metrics of the suspicious user's browser are obtained during additional verification of the user, namely, the operability of various features of the Java Script language is checked, and the browser version is specified.

8. The method according to claim 6, wherein additional metrics of the suspicious user's browser are obtained during the additional verification of the user, namely, the operability of various implementations of the CSS language is checked, and the version of the browser is specified.

9. The method according to claim 6, wherein during additional verification of the user, additional metrics of the suspicious user's browser are obtained, namely, the operability of various implementations of the HTML language is checked, and the version of the browser is specified.

10. The method according to claim 6, wherein additional metrics of the suspicious user's browser are obtained during the additional verification of the user, namely, the window parameters, the presence of mouse movement and other factors are checked, ensuring the clarification of the browser operation mode.

11. The method according to claim 6, wherein during the additional verification of the user, additional metrics of the suspicious user's browser are obtained, namely, a signature that is unique for the given browser installation is obtained, which signature at the same time doesn't provide unambiguous identification of the browser.

12. System for preventing suspicious automated activity, comprising:
a server comprising the service/services for processing user requests with a module for evaluating the legitimacy of the request from the user and an additional verification module that performs additional verification of the user,
wherein the module for evaluating the legitimacy of the user's request is configured as follows:
a module for connection metrics collection,
a module for basic metrics collection at the application level,
a module of statistical user metrics,
a module for matching metrics by session with the values usual for a given resource,
said modules are configured to transmit data to a module for computation of the vector of request factors, which is configured to transmit data to a module for sending factors to a statistical model and calculate the result,
and wherein both of the last named modules are also made as part of the module for evaluating the legitimacy of the request from the user.

13. The system according to claim 12, wherein the collection of connection metrics is performed at least at the network layer and/or transport layer.

14. The system according to claim 12, in which the following are performed as part of the additional verification module:
JS stack checking module, which checks the functionality of JS language features,
CSS stack checking module, which checks the functionality of the CSS implementation features,
HTML stack checking module, which checks the functionality of HTML implementation features,
HeadLess detection module, which checks the window parameters, the presence of mouse movement and factors that reveal the browser operation mode,
module for calculating a unique signature, which provides the calculation of a unique signature for the given browser installation that prevents the unique identification of the browser,
a module for sending collected data associated with the above-mentioned modules,
a cryptographic module that generates and sends a task to the user,
a starting unit associated with the above-mentioned modules.
